(19)

Europäisches
Patentamt
European
Patent Office
Office européen
des brevets

(11) **EP 2 666 889 A1**

(12) **EUROPEAN PATENT APPLICATION**

(43) Date of publication:
   **27.11.2013 Bulletin 2013/48**

(51) Int Cl.:
   **C25C 3/18** (2006.01)   **C01F 7/54** (2006.01)

(21) Application number: **12195420.0**

(22) Date of filing: **04.12.2012**

(84) Designated Contracting States:
   **AL AT BE BG CH CY CZ DE DK EE ES FI FR GB GR HR HU IE IS IT LI LT LU LV MC MK MT NL NO PL PT RO RS SE SI SK SM TR**
   Designated Extension States:
   **BA ME**

(30) Priority: **23.05.2012 CN 201210161989**

(71) Applicant: **Shenzhen Sunxing Light Alloys Materials Co., Ltd**
   **Shenzhen, Guangdong 518000 (CN)**

(72) Inventors:
   • **Chen, Xuemin**
     **518000 Shenzhen (CN)**
   • **Yang, Jun**
     **518000 Shenzhen (CN)**
   • **Li, Zhihong**
     **518000 Shenzhen (CN)**
   • **Wu, Weiping**
     **518000 Shenzhen (CN)**

(74) Representative: **Prol European Patent Attorneys**
   **Postfach 2123**
   **90711 Fürth (DE)**

(54) **Sodium cryolite for aluminum electrolysis industry and preparation method thereof**

(57)   The invention provides a sodium cryolite for aluminum electrolysis industry, which has a molecular formula: $m\text{NaF} \cdot \text{AlF}_3$, wherein m is from 1 to 1.5. The low-molecular-ratio sodium cryolite ($m\text{NaF} \cdot \text{AlF}_3$, and m is from 1 to 1.5) provided by the invention is used for aluminum electrolysis industry, and can reduce the temperature of electrolysis and the consumption of power, raise the efficiency of electrolysis and lower the comprehensive production cost.

EP 2 666 889 A1

**Description**

**Technical Field of the Invention**

The invention relates to sodium cryolite, more particularly to a sodium cryolite for aluminum electrolysis industry and a preparation method thereof.

**Background of the Invention**

The traditional Hall-Heroult method has still been employed in aluminum electrolysis industry so far and cryolite-aluminum oxide has served as the basic system for electrolyte all the time, and in this system, sodium hexafluoroaluminate is usually used as cryolite. The temperature of electrolysis in aluminum electrolysis industry is about 960°C, which leads to high consumption of power, this is mainly because of high primary crystal temperature of electrolyte, besides, in order to keep good solubility of aluminum oxide, the degree of superheat at a particular temperature needs to be kept.

The method for industrially preparing sodium fluoroaluminate (sodium cryolite) mainly is chemical synthesis method: fluoroaluminate is generated by the reaction between anhydrous hydrofluoric acid and aluminum hydroxide, then reacted with sodium hydroxide at high temperature, and finally filtered, dried, molten and crushed to obtain sodium fluoroaluminate product; the sodium fluoroaluminate, which is synthesized using such a method, has a relative molecular weight of 209.94, a molecular formula of $mNaF \cdot AlF_3$ (m=3.0) and a melting point of 1008°C. The sodium cryolite prepared using the current industrial synthesis methods generally has a molecular ratio m between 2.0 and 3.0, so it is difficult to prepare low-molecular-ratio sodium cryolite, which is pure and extremely low in water content and has a molecular ratio m between 1.0 and 1.5.

Therefore, the shortcomings like high power consumption in electrolysis and unsatisfactory electrolyte exist in the prior art.

**Summary of the Invention**

To solve the technical problems in the prior art, the inventor has made tremendous researches on electrolyte selection and preparation method and has unexpectedly found that, the temperature of electrolysis in aluminum electrolysis industry can be reduced by using low-molecular-ratio sodium cryolite, which is prepared from the raw material of sodium fluorotitanate, sodium fluoborate or the mixture thereof according to a thermo-chemical synthesis method, as electrolyte for aluminum electrolysis system, therefore, the consumption of power is reduced and the comprehensive production cost is lowered.

The invention provides a sodium cryolite for aluminum electrolysis industry, which has a chemical formula of $mNaF \cdot AlF_3$, wherein m is from 1 to 1.5.

By adopting the technical proposal above, the low-molecular-ratio sodium cryolite ($mNaF \cdot AlF_3$, and m is from 1 to 1.5) provided by the invention is used for aluminum electrolysis industry, and can improve the dissolvability of aluminum oxide, thus reducing the temperature of electrolysis and the consumption of power, raising the efficiency of electrolysis and lowering the comprehensive production cost.

As a further improvement of the invention, the m is 1, 1.2 or 1.5; the melting point of $mNaF \cdot AlF_3$ is about 960~1000°C within m=1.0~1.5, the melting point of sodium cryolite $mNaF \cdot AlF_3$ increased a little with m increasing;

The dissolubility of aluminum oxide in $3NaF \cdot AlF_3$ molten liquid is about 7g/L, and the dissolubility of aluminum oxide in

$$\frac{3}{2}NaF \cdot AlF_3,$$

$NaF \cdot AlF_3$ and

$$\frac{6}{5}NaF \cdot AlF_3$$

molten liquids is all within a range from 7g/l to 10g/l, so the dissolubility increased remarkably as m decreased; the low-molecular-ratio sodium cryolite

$$\frac{3}{2} NaF \cdot AlF_3,$$

NaF·AlF3 and

$$\frac{6}{5} NaF \cdot AlF_3$$

can reduce the temperature of electrolysis, lower the consumption of power and improve the efficiency of electrolysis when used for aluminum electrolysis industry.

Correspondingly, the invention further provides a preparation method of sodium cryolite for aluminum electrolysis industry, comprising the following steps:

A) aluminum is put in a reactor, which is heated up to 700-850°C and then added with sodium fluorotitanate, sodium fluoborate or the mixture thereof; and

B) after the mixture in the reactor is stirred for 4-6 hours, liquid molten at the upper layer is sucked out to obtain sodium cryolite.

The preparation method provided by the invention has the advantages of moderate reaction conditions, easy control, simple process flow, complete reaction and good quality of product.

As a further improvement of the invention, the preparation method of sodium cryolite for aluminum electrolysis industry comprises the following steps:

A) aluminum is put in a reactor that is a closed container, inert gas is fed into the reactor after evacuation, and the reactor is heated up to 780-850°C and then added with sodium fluorotitanate; and

B) after the mixture in the reactor is stirred for 4-6 hours, liquid molten at the upper layer is sucked out to obtain sodium cryolite having a chemical formula:

$$\frac{3}{2} NaF \cdot AlF_3.$$

The chemical reaction formula involved is

$$\frac{3}{4} Na_2 TiF_6 + Al = \frac{3}{4} Ti + \frac{3}{2} NaF \cdot AlF_3.$$

As a further improvement of the invention, the preparation method of sodium cryolite for aluminum electrolysis industry comprises the following steps:

A) aluminum is put in a reactor that is a closed container, inert gas is fed into the reactor after evacuation, and the reactor is heated up to 700-850°C and then added with sodium fluoborate; and

B) after the mixture in the reactor is stirred for 4-6 hours, liquid molten at the upper layer is sucked out to obtain sodium cryolite having a chemical formula: NaF·AlF3. The chemical reaction formula involved is $NaBF_4 + Al = B + NaF \cdot AlF_3$.

As a further improvement of the invention, the preparation method of sodium cryolite for aluminum electrolysis industry comprises the following steps:

A) aluminum is put in a reactor that is a closed container, inert gas is fed into the reactor after evacuation, and the reactor is heated up to 700-850°C and then added with the mixture of sodium fluoborate and sodium fluorotitanate based on a molar ratio of 2: 1; and

B) after the mixture in the reactor is stirred for 4-6 hours, liquid molten at the upper layer is sucked out to obtain sodium cryolite having a chemical formula:

$$\frac{6}{5} NaF \cdot AlF_3 .$$

The chemical reaction formula involved is

$$Na_2TiF_6 + 2NaBF_4 + \frac{10}{3}Al = TiB_2 + \frac{10}{3}\left[\frac{6}{5}NaF \cdot AlF_3\right].$$

As a further improvement of the invention, the preparation method of sodium cryolite for aluminum electrolysis industry comprises the following steps:

A) aluminum is put in a reactor, which is heated up to 700-850°C and then added with the mixture of sodium fluoborate and sodium fluorotitanate based on a molar ratio of y: x; and

B) after the mixture in the reactor is stirred for 0.5-6 hours, liquid molten at the upper layer is sucked out to obtain sodium cryolite having a chemical formula:

$$\frac{3y + 6x}{3y + 4x} NaF \cdot AlF_3 .$$

The chemical reaction formula involved is

$$Na_2TiF_6 + NaBF_4 + Al \rightarrow Al \cdot Ti \cdot B + \frac{3y + 6x}{3y + 4x} NaF \cdot AlF_3 .$$

Compared with the prior art, the invention has the advantage that: the low-molecular-ratio sodium cryolite (mNaF·AlF3, and m is from 1 to 1.5) provided by the invention, with a proper electric conductivity, is used for aluminum electrolysis industry, and can improve the dissolvability of aluminum oxide, thus reducing the temperature of electrolysis and the consumption of power, raising the efficiency of electrolysis and lowering the comprehensive production cost; the preparation method of low-molecular-ratio sodium cryolite provided by the invention is moderate in reaction conditions, easy in control, simple in process flow, complete in reaction and good in quality of product.

**Detailed Description of the Embodiments**

Further detailed description is made to the invention with reference to the embodiments below.

**Embodiment 1**

1 ton of aluminum is weighed and put in a reactor, argon is fed into the reactor for the purpose of protection after evacuation, the reactor is heated up to 800°C and then slowly added with dry sodium fluorotitanate based on a reaction proportion, sponge titanium and sodium cryolite (

$$\frac{3}{2} NaF \cdot AlF_3$$

) are generated after the mixture in the reactor is rapidly stirred for 5 hours, the cover of the reactor is opened and liquid-state sodium cryolite molten at the upper layer is sucked out by a siphon pump.

The sodium cryolite (

$$\frac{3}{2}NaF \cdot AlF_3$$

) prepared is used for aluminum electrolysis industry, the electrolyte system consists of sodium cryolite and aluminum oxide, the temperature for electrolysis can be controlled within a working range from 900°C to 960°C by using the electrolyte consisting of the sodium cryolite (

$$\frac{3}{2}NaF \cdot AlF_3$$

) provided by the invention, and primary aluminum can be obtained by using inert electrode material, carbon electrode material or mixed (co-use of carbon electrode material and inert electrode material) electrode material for electrolysis.

**Embodiment 2**

1 ton of aluminum is weighed and put in a reactor, argon is fed into the reactor for the purpose of protection after evacuation, the reactor is heated up to 780°C and then slowly added with dry sodium fluoborate based on a reaction proportion, boron and sodium cryolite (NaF·AlF3) are generated after the mixture in the reactor is rapidly stirred for 5 hours, the cover of the reactor is opened and liquid-state sodium cryolite molten at the upper layer is sucked out by a siphon pump.

The sodium cryolite (NaF·AlF3) prepared is used for aluminum electrolysis industry, the electrolyte system consists of sodium cryolite and aluminum oxide, the temperature for electrolysis can be controlled within a working range from 900°C to 960°C by using the electrolyte consisting of the sodium cryolite (NaF·AlF3) provided by the invention, and primary aluminum can be obtained by using inert electrode material, carbon electrode material or mixed (co-use of carbon electrode material and inert electrode material) electrode material for electrolysis.

**Embodiment 3**

1 ton of aluminum is weighed and put in a reactor, argon is fed into the reactor for the purpose of protection after evacuation, the reactor is heated up to 750°C and then slowly added with dry mixture of sodium fluoborate and sodium fluorotitanate based on a reaction proportion, the molar ratio of sodium fluoborate to sodium fluorotitanate is 2:1, titanium boride and sodium cryolite (

$$\frac{6}{5}NaF \cdot AlF_3$$

) are generated after the mixture in the reactor is rapidly stirred for 5 hours, the cover of the reactor is opened and liquid-state sodium cryolite molten at the upper layer is sucked out by a siphon pump.

The sodium cryolite (

$$\frac{6}{5}NaF \cdot AlF_3$$

) prepared is used for aluminum electrolysis industry, the electrolyte system consists of sodium cryolite and aluminum oxide, the temperature for electrolysis can be controlled within a working range from 900°C to 960°C by using the electrolyte consisting of the sodium cryolite (

$$\frac{6}{5} NaF \cdot AlF_3$$

) provided by the invention, and primary aluminum can be obtained by using inert electrode material, carbon electrode material or mixed (co-use of carbon electrode material and inert electrode material) electrode material for electrolysis.

**Embodiment 4**

5 tons of aluminum is weighed and put in a reactor, the reactor is heated up to 750°C and then slowly added with 2 tons of dry mixture of sodium fluoborate and sodium fluorotitanate, the molar ratio of sodium fluoborate to sodium fluorotitanate is 1:1, aluminum-titanium-boron alloy and sodium cryolite (

$$\frac{9}{7} NaF \cdot AlF_3$$

) are generated due to excessive amount of aluminum after the mixture in the reactor is rapidly stirred for 4 hours, the cover of the reactor is opened and liquid-state sodium cryolite molten at the upper layer is sucked out by a siphon pump.

The sodium cryolite (

$$\frac{9}{7} NaF \cdot AlF_3$$

) prepared is used for aluminum electrolysis industry, the electrolyte system consists of sodium cryolite and aluminum oxide, the temperature for electrolysis can be controlled within a working range from 900°C to 960°C by using the electrolyte consisting of the sodium cryolite (

$$\frac{9}{7} NaF \cdot AlF_3$$

) provided by the invention, and primary aluminum can be obtained by using inert electrode material, carbon electrode material or mixed (co-use of carbon electrode material and inert electrode material) electrode material for electrolysis.

The content discussed above is merely for further detailed description of the invention with reference to the preferred embodiments, and it shall not be considered that the embodiments of the invention are limited to the description only. Many simple deductions or substitutions could be made without departing from the concept of the invention by ordinary skilled in the art to which the invention pertains, and shall be contemplated as being within the scope of the invention.

**Claims**

1. A sodium cryolite for aluminum electrolysis industry, **characterized in that**: the sodium cryolite has a molecular formula: $mNaF \cdot AlF_3$, wherein m is from 1 to 1.5.

2. The sodium cryolite for aluminum electrolysis industry according to claim 1, **characterized in that**: the m is 1, 1.2 or 1.5.

3. A preparation method of sodium cryolite for aluminum electrolysis industry according to claim 1 or 2, **characterized in that**: the method comprises the following steps: A) aluminum is put in a reactor, which is heated up to 700-850°C and then added with sodium fluorotitanate, sodium fluoborate or the mixture thereof; and B) after the mixture in the reactor is stirred for 4-6 hours, liquid molten at the upper layer is sucked out to obtain sodium cryolite.

4. The preparation method of sodium cryolite for aluminum electrolysis industry according to claim 3, **characterized**

**in that**: the method comprises the following steps: A) aluminum is put in a reactor that is a closed container, inert gas is fed into the reactor after evacuation, and the reactor is heated up to 780-850°C and then added with sodium fluorotitanate; and B) after the mixture in the reactor is stirred for 4-6 hours, liquid molten at the upper layer is sucked out to obtain sodium cryolite having a chemical formula:

$$\frac{3}{2} NaF \cdot AlF_3$$

5. The preparation method of sodium cryolite for aluminum electrolysis industry according to claim 3, **characterized in that**: the method comprises the following steps: A) aluminum is put in a reactor that is a closed container, inert gas is fed into the reactor after evacuation, and the reactor is heated up to 700-850°C and then added with sodium fluoborate; and B) after the mixture in the reactor is stirred for 4-6 hours, liquid molten at the upper layer is sucked out to obtain sodium cryolite having a chemical formula: $KF \cdot AlF_3$.

6. The preparation method of sodium cryolite for aluminum electrolysis industry according to claim 3, **characterized in that**: the method comprises the following steps: A) aluminum is put in a reactor that is a closed container, inert gas is fed into the reactor after evacuation, and the reactor is heated up to 700-850°C and then added with the mixture of sodium fluoborate and sodium fluorotitanate based on a molar ratio of 2: 1; and B) after the mixture in the reactor is stirred for 4-6 hours, liquid molten at the upper layer is sucked out to obtain sodium cryolite having a chemical formula:

$$\frac{6}{5} NaF \cdot AlF_3$$

7. The preparation method of sodium cryolite for aluminum electrolysis industry according to claim 3, **characterized in that**: the method comprises the following steps: A) aluminum is put in a reactor, which is heated up to 700-850°C and then added with the mixture of sodium fluoborate and sodium fluorotitanate based on a molar ratio of y: x; and B) after the mixture in the reactor is stirred for 0.5-6 hours, liquid molten at the upper layer is sucked out to obtain sodium cryolite having a chemical formula:

$$\frac{3y + 6x}{3y + 4x} NaF \cdot AlF_3.$$

Europäisches
Patentamt

European
Patent Office

Office européen
des brevets

## EUROPEAN SEARCH REPORT

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | US 4 390 365 A (HARD ROBERT A ET AL) 28 June 1983 (1983-06-28) * columns 3,5,6; example 7 * ----- | 1-4 | INV. C25C3/18 C01F7/54 |
| X | US 2 837 426 A (JONAS KAMLET) 3 June 1958 (1958-06-03) * the whole document * ----- | 1-4 | |
| X | US 4 668 286 A (MEGY JOSEPH A [US]) 26 May 1987 (1987-05-26) * the whole document * ----- | 1-4 | |
| X | US 2 785 971 A (JONAS KAMLET) 19 March 1957 (1957-03-19) * the whole document * ----- | 1-4 | |
| E | WO 2013/023460 A1 (SHENZHEN SUNXING LIGHT ALLOYS MATERIALS CO LTD [CN]; CHEN XUEMIN [CN];) 21 February 2013 (2013-02-21) * the whole document * & US 2013/095020 A1 (CHEN XUEMIN [CN] ET AL) 18 April 2013 (2013-04-18) ----- | 1-3,6,7 | |
| | | | TECHNICAL FIELDS SEARCHED (IPC) |
| E | WO 2013/020396 A1 (SHENZHEN SUNXING LIGHT ALLOYS MATERIALS CO LTD [CN]; CHEN XUEMIN [CN];) 14 February 2013 (2013-02-14) * the whole document * & US 2013/095024 A1 (CHEN XUEMIN [CN] ET AL) 18 April 2013 (2013-04-18) * paragraph [0007] - paragraph [0016] * ----- | 1-3,5 | C25C C01F C01G |

The present search report has been drawn up for all claims

| Place of search | Date of completion of the search | Examiner |
|---|---|---|
| The Hague | 30 May 2013 | Gumann, Sina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 12 19 5420

This annex lists the patent family members relating to the patent documents cited in  the above-mentioned European search report.
The members are as contained in the European Patent Office EDP file on
The European Patent Office is in no way liable for these particulars which are merely given for the purpose of information.

30-05-2013

| Patent document cited in search report | | | Publication date | Patent family member(s) | | Publication date |
|---|---|---|---|---|---|---|
| US 4390365 | A | | 28-06-1983 | NONE | | |
| US 2837426 | A | | 03-06-1958 | NONE | | |
| US 4668286 | A | | 26-05-1987 | EP<br>JP<br>NO<br>US | 0360792 A1<br>H03500063 A<br>890315 A<br>4668286 A | 04-04-1990<br>10-01-1991<br>25-01-1989<br>26-05-1987 |
| US 2785971 | A | | 19-03-1957 | NONE | | |
| WO 2013023460 | A1 | | 21-02-2013 | CN<br>US<br>WO | 102583421 A<br>2013095020 A1<br>2013023460 A1 | 18-07-2012<br>18-04-2013<br>21-02-2013 |
| WO 2013020396 | A1 | | 14-02-2013 | CN<br>US<br>WO | 102583420 A<br>2013095024 A1<br>2013020396 A1 | 18-07-2012<br>18-04-2013<br>14-02-2013 |

EPO FORM P0459

For more details about this annex : see Official Journal of the European Patent Office, No. 12/82